# EUROPEAN PATENT APPLICATION

(11) **EP 4 582 515 A1**
(43) Date of publication of application: **09.07.2025**
(21) Application number: 24221705.7
(22) Date of filing: 19.12.2024
(51) Int. Cl.: C10B 53/07, C10G 1/10

(54) **PYROLYSIS REACTOR AND APPARATUS HAVING SAME FOR RECOVERING CARBON FIBER AND GLASS FIBER**

(30) Priority: 05.01.2024 KR 20240001955
(71) Applicant: Doosan Enerbility Co., Ltd., Seongsan-gu Changwon-si, Gyeongsangnam-do 51711 (KR)
(72) Inventor: CHO, Sung Jin, 50976 Gimhae-si, Gyeongsangnam-do (KR)
(74) Representative: BCKIP Part mbB

(57) **Abstract**

Proposed are a pyrolysis reactor and an apparatus having the same for recovering carbon fiber and glass fiber. The pyrolysis reactor includes a casing, at least one movement module, and at least one stirring module. The movement module includes a spiral wing mounted on an inner wall of the casing and deployed in a longitudinal direction of the casing. The stirring module includes a plurality of plate-shaped swirlers mounted perpendicularly on the inner wall of the casing the casing so that each of the swirlers extends in the longitudinal direction of the casing. The stirring module is arranged alternately with the movement module. The movement module moves a waste composite material within the casing, and the stirring module mixes the waste composite material with hot air within the casing. Heat is effectively transferred to the waste composite material by the stirring module, decreasing time required for a pyrolysis process.

## Description

The present application claims priority to Korean Patent Application No. 10-2024-0001955, filed on January 5, 2024.

### BACKGROUND

### 1. Technical Field

The present disclosure relates to a pyrolysis reactor and an apparatus having the same for recovering carbon fiber and glass fiber.

### 2. Description of the Related Art

Wind power generation is a method of power generation that converts the kinetic energy of wind into mechanical energy by rotating blades, and then converts the mechanical energy into electrical energy. The use of the method is increasing as an alternative to existing power generation methods that mainly use fossil fuels.

A wind turbine has a plurality of blades mounted on a rotating shaft thereof. To produce more electrical energy, the blades are made long and wide. As the size of each of the blades increases, the weight of the blade increases. However, the blade is required to be made as light as possible for energy efficiency. Additionally, since the blade is constantly exposed to wind, the strength of the blade is required to be improved to ensure durability thereof. To solve these problems, carbon fiber reinforced plastic or glass fiber reinforced plastic is used as the material of the blade. A composite material containing carbon fiber and glass fiber is lightweight yet highly strong, and is used in a variety of fields, such as automobiles, and aviation, etc. in addition to blades.

However, once the blades of a wind turbine break or reach the end of their lifespan, disposal of waste blades becomes a problem. Typically, composite materials such as carbon fiber reinforced plastic or glass fiber reinforced plastic are difficult to recycle and are often landfilled. However, it is impossible to continue to landfill the increasing volume of composite material waste, and the need for non-landfill treatment methods or recycling methods continues to arise.

Accordingly, there is a need to develop a reactor and a recovery apparatus capable of effectively recovering a carbon fiber or a glass fiber from waste blades which have reached the end of their lifespan. Additionally, there is a need to develop an apparatus and a method capable of recovering carbon fibers and glass fibers contained in a waste composite material generated by the automobile industry, and aviation industry, in addition to waste blades.

The foregoing is intended merely to aid in the understanding of the background of the present disclosure, and is not intended to mean that the present disclosure falls within the purview of the related art that is already known to those skilled in the art.

### SUMMARY

Accordingly, the present disclosure has been made keeping in mind the above problems occurring in the related art, and an objective of the present disclosure is to provide a pyrolysis reactor and an apparatus for recovering carbon fiber and glass fiber, in which it is possible to recover recycled fibers in a short period of time by maximizing heat transfer efficiency.

Another objective of the present disclosure is to provide a pyrolysis reactor and an apparatus for recovering carbon fiber and glass fiber, in which waste composite materials are prevented from being stuck and accumulating inside the pyrolysis reactor during the rotation of the pyrolysis reactor.

A pyrolysis reactor according to an embodiment of the present disclosure includes a casing, at least one movement module, and at least one stirring module. The casing has a cylindrical shape. The movement module may include a spiral wing mounted on an inner wall of the casing and deployed in a longitudinal direction of the casing. The stirring module may include a plurality of plate-shaped swirlers mounted perpendicularly on the inner wall of the casing so that each of the swirlers extends in the longitudinal direction of the casing. The stirring module may be arranged alternately with the movement module.

In the pyrolysis reactor according to the embodiment of the present disclosure, the swirler may include: a flat portion having a short side in a radial direction of the casing; and an inclined portion inclined at a predetermined angle with respect to the flat portion.

In the pyrolysis reactor according to the embodiment of the present disclosure, an angle between the flat portion and the inclined portion is 90 to 170°.

In the pyrolysis reactor according to the embodiment of the present disclosure, an end part of the inclined portion is directed in a rotational direction of the casing.

In the pyrolysis reactor according to the embodiment of the present disclosure, a length ratio of a cross-section of the flat portion to a cross-section of the inclined portion is 1:1 to 1: 0.3.

The pyrolysis reactor according to the embodiment of the present disclosure may further include: a heating furnace including a burner and accommodating the casing therein.

The pyrolysis reactor according to the embodiment of the present disclosure may further include: a feeding part arranged on one side of the heating furnace and connected to an end part of one side of the casing.

In the pyrolysis reactor according to the embodiment of the present disclosure, the feeding part may include: a first valve located at an upstream side thereof; a second valve located at a downstream side thereof; and a gas inlet located between the first valve and the second valve.

In the pyrolysis reactor according to the embodiment of the present disclosure, combustion gas of 400 to 500 °C may be supplied into the casing.

In the pyrolysis reactor according to the embodiment of the present disclosure, a distance between neighboring spirals in the spiral wing may be 0.1 to 0.3 m.

A pyrolysis reactor according to another embodiment of the present disclosure includes: a casing; a movement module; and a stirring module. The casing is formed in a cylindrical shape. The movement module may include a spiral wing mounted on an inner wall of the casing and deployed in a longitudinal direction of the casing. The stirring module may include a plurality of plate-shaped swirlers mounted perpendicularly on the inner wall of the casing, with each of the swirlers having one side fitted into the spiral wing and extending in the longitudinal direction of the casing.

In the pyrolysis reactor according to another embodiment of the present disclosure, the swirler may include: a flat portion having a short side in a radial direction of the casing; and an inclined portion inclined at a predetermined angle with respect to the flat portion. An angle between the flat portion and the inclined portion may be 90 to 170°.

An apparatus for recovering carbon fiber and glass fiber according to an embodiment of the present disclosure includes: a waste composite material supply unit; a reaction unit configured to heat a waste composite material supplied from the waste composite material supply unit; a heat supply unit configured to supply heat to the reaction unit; a reforming unit configured to separate pyrolysis gas discharged from the reaction unit into gas and oil; and a separation unit including a separation part configured to separate a product of the reaction unit into a first material and a second material, a first chamber configured to accommodate the first material, and a second chamber configured to accommodate the second material. The reaction unit includes at least one pyrolysis reactor. The pyrolysis reactor includes: a casing; at least one movement module; and at least one stirring module. The casing has a cylindrical shape. The movement module may include a spiral wing mounted on an inner wall of the casing and deployed in a longitudinal direction of the casing. The stirring module may include a plurality of plate-shaped swirlers mounted perpendicularly on the inner wall of the casing so that each of the swirlers extends in the longitudinal direction of the casing. The stirring module may be arranged alternately with the movement module.

In the apparatus for recovering carbon fiber and glass fiber according to an embodiment of the present disclosure, the swirler may include: a flat portion having a short side in a radial direction of the casing; and an inclined portion inclined at a predetermined angle with respect to the flat portion.

In the apparatus for recovering carbon fiber and glass fiber according to an embodiment of the present disclosure, an angle between the flat portion and the inclined portion may be 90 to 170°.

In the apparatus for recovering carbon fiber and glass fiber according to an embodiment of the present disclosure, an end part of the inclined portion may be directed in a rotational direction of the casing.

In the apparatus for recovering carbon fiber and glass fiber according to an embodiment of the present disclosure, a length ratio of a cross-section of the flat portion to a cross-section of the inclined portion may be 1:1 to 1: 0.3.

In the apparatus for recovering carbon fiber and glass fiber according to an embodiment of the present disclosure, the pyrolysis reactor further may include a heating furnace including a burner and accommodating the casing therein.

In the apparatus for recovering carbon fiber and glass fiber according to an embodiment of the present disclosure, the pyrolysis reactor may further include a feeding part arranged on one side of the heating furnace and connected to an end part of one side of the casing.

In the apparatus for recovering carbon fiber and glass fiber according to an embodiment of the present disclosure, the feeding part may include: a first valve located at an upstream side thereof; a second valve located at a downstream side thereof; and a gas inlet located between the first valve and the second valve.

In the apparatus for recovering carbon fiber and glass fiber according to an embodiment of the present disclosure, combustion gas of 400 to 500°C may be supplied into the casing.

In the apparatus for recovering carbon fiber and glass fiber according to an embodiment of the present disclosure, a distance between neighboring spirals in the spiral wing may be 0.1 to 0.3 m.

According to an embodiment of the present disclosure, it is possible to recover recycled fibers in a short period of time by maximizing heat transfer efficiency.

According to an embodiment of the present disclosure, it is possible to prevent waste composite materials from being stuck and accumulating inside the pyrolysis reactor during the rotation of the pyrolysis reactor.

### BRIEF DESCRIPTION OF THE DRAWINGS

FIG. 1 is a view illustrating a pyrolysis reactor according to an embodiment of the present disclosure;
FIG. 2 is a cross-sectional view illustrating the pyrolysis reactor according to the embodiment of the present disclosure;
FIG. 3 is a view illustrating a movement module in the pyrolysis reactor according to the embodiment of the present disclosure;
FIG. 4 is a view illustrating a stirring module in the pyrolysis reactor according to the embodiment of the present disclosure;
FIG. 5 is a view illustrating a swirler in the pyrolysis reactor according to the embodiment of the present disclosure;
FIG. 6 is a view illustrating a transverse cross-section of the pyrolysis reactor according to the embodiment of the present disclosure;
FIGS. 7A and 7B are views illustrating a pyrolysis reactor according to another embodiment of the present disclosure;
FIG. 8 is a view illustrating a movement module and a stirring module in the pyrolysis reactor according to the embodiment of the present disclosure;
FIG. 9 is a view illustrating a pyrolysis reactor according to an embodiment of the present disclosure;
FIG. 10 is a diagram schematically illustrating an apparatus for recovering carbon fiber and glass fiber according to an embodiment of the present disclosure;
FIG. 11 is a view illustrating two pyrolysis reactors installed in a stacked manner according to an embodiment of the present disclosure; and
FIG. 12 is a view illustrating a transverse cross-section of the two pyrolysis reactors installed in a stacked manner according to the embodiment of the present disclosure.

### DETAILED DESCRIPTION

Since the present disclosure can be modified in various ways and can have various embodiments, specific embodiments will be exemplified and explained in detail in the detailed description. However, it should be noted that the present disclosure is not limited thereto, and may include all of modifications, equivalents, and substitutions within the spirit and scope of the present disclosure.

Terms used herein are used to merely describe specific embodiments, and are not intended to limit the present disclosure. As used herein, an element expressed as a singular form includes a plurality of elements, unless the context clearly indicates otherwise. Further, it will be understood that the term "comprising" or "including" specifies the presence of stated features, numbers, steps, operations, elements, parts, or combinations thereof, but does not preclude the presence or addition of one or more other features, numbers, steps, operations, elements, parts, or combinations thereof.

Hereinafter, the exemplary embodiments of the present disclosure will be described in detail with reference to the accompanying drawings. It should be noted that like elements are denoted in the drawings by like reference symbols as whenever possible. Further, the detailed description of known functions and configurations that may obscure the gist of the present disclosure will be omitted. For the same reason, some of the elements in the drawings are exaggerated, omitted, or schematically illustrated.

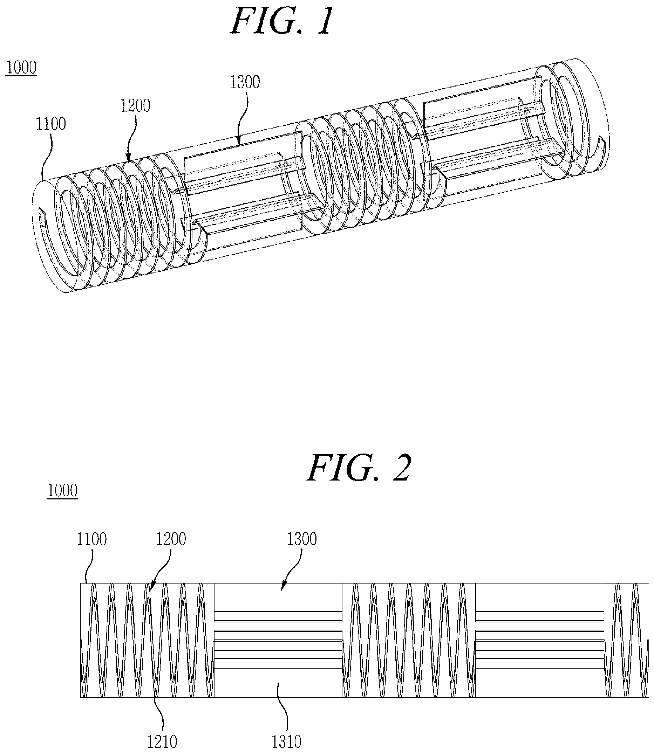

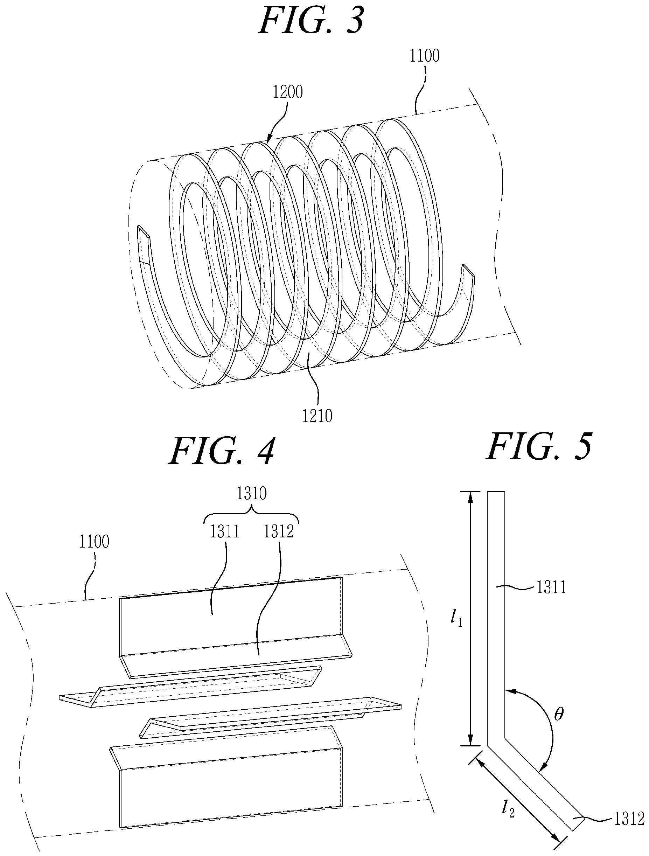

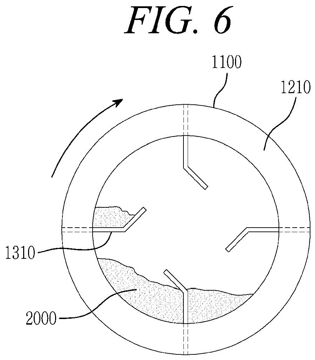

FIG. 1 is a view illustrating a pyrolysis reactor according to an embodiment of the present disclosure, FIG. 2 is a cross-sectional view illustrating the pyrolysis reactor according to the embodiment of the present disclosure, FIG. 3 is a view illustrating a movement module in the pyrolysis reactor according to the embodiment of the present disclosure, FIG. 4 is a view illustrating a stirring module in the pyrolysis reactor according to the embodiment of the present disclosure, FIG. 5 is a view illustrating a swirler in the pyrolysis reactor according to the embodiment of the present disclosure, and FIG. 6 is a view illustrating a transverse cross-section of the pyrolysis reactor according to the embodiment of the present disclosure.

As illustrated in FIGS. 1 and 2, a pyrolysis reactor 1000 according to the present disclosure includes a casing 1100, a movement module 1200, and a stirring module 1300.

The casing 1100 is formed in a cylindrical shape. A waste composite material is pyrolyzed within the casing 1100. The casing 1100 may rotate in one direction for mixing a waste composite material. To maintain a reducing atmosphere during the pyrolysis of the waste composite material, combustion gas is injected into and discharged from the casing 1100. Gas of 400 to 500°C may be injected into the casing 1100.

The interior of the casing 1100 may maintain a reducing atmosphere. To maintain the reducing atmosphere, gas exhausted from the casing 1100 may be recirculated into the casing. The exhaust gas consists of nitrogen, carbon dioxide, etc. One or more oxygen measuring sensors may be placed within the casing 1100. The oxygen measuring sensor continuously measures oxygen concentration inside the casing 1100 and controls the oxygen concentration inside the casing 1100 to be less than 10%.

The casing 1100 has a length sufficient to ensure the residence time of the waste composite material. The residence time may be at least 2 hours.

The movement module 1200 moves the waste composite material within the casing 1100 as the casing 1100 rotates. As illustrated in FIG. 3, the movement module 1200 includes a spiral wing 1210. The spiral wing 1210 is fixed on the inner wall of the casing 1100.

The width of the spiral wing 1210 may be adjusted according to design specification. For example, the width of the spiral wing 1210 may be 10 to 15 cm. A distance between neighboring spirals of the spiral wing 1210 may be set to be different depending on target residence time. For example, the distance between the spirals of the spiral wing 1210 may be 0.1 to 0.3 m.

The residence speed of a waste composite material and the state of a reactant may be controlled by controlling the distance between the spirals of the spiral wing 1210 and the rotation speed of the casing 1100.

The material of the spiral wing 1210 may be metal with high thermal conductivity. The waste composite material may receive heat by being in contact with the spiral wing 1210.

The stirring module 1300 mixes the waste composite material with hot air within the casing 1100. The swirler of the stirring module 1300 may effectively transfer heat to the waste composite material while mixing the waste composite material.

As illustrated in FIG. 4, the stirring module 1300 includes a plurality of swirlers. The plurality of swirlers 1310 may be arranged at equal angular intervals on the inner wall of the casing 1100. Two to four swirlers 1310 may be arranged along the inner circumferential surface of the casing 1100.

The swirler 1310 has the shape of a rectangular plate. The swirler 1310 has a long side extending in the longitudinal direction of the casing 1100 and a short side deployed in the radial direction of the casing. A first end of the swirler 1310 is fixed on the inner wall of the casing 1100, and a second end thereof is deployed toward the interior of the casing 1100.

The swirler 1310 may be bent at a predetermined angle on one side of the deploying direction (FIG. 5). As the second end of the swirler 1310 is bent, the swirler 1310 has a flat portion 1311 and an inclined portion 1312. The first end of the flat portion 1311 is fixed to the inner wall of the casing 1100, and the second end thereof is directed in the radial direction of the casing 1100. The inclined portion 1312 has a first end connected to the flat portion 1311 and is inclined at a predetermined angle with respect to the flat portion 1311. An angle θ between the flat portion 1311 and the inclined portion 1312 may be 90 to 170°, and preferably 90 to 120°.

During the rotation of the casing 1100, more heat is transferred to a waste composite material by the swirler 1310. When the casing 1100 rotates, the movement of the waste composite material located at the lower part of the casing 1100 is restricted by the swirler 1310. When the swirler 1310 is positioned above a predetermined height by the rotation of the casing 1100, the waste composite material fractionated by the swirler 1310 falls. In this case, the inclined portion 1312 of the swirler 1310 restricts the falling of the waste composite material that is in contact with the flat portion 1311, thereby preventing the waste composite material from falling directly to the lower part of the casing 1100. The waste composite material may efficiently receive heat by being in contact with the swirler 1310 for a long time by the inclined portion 1312.

In this case, the larger an angle between the flat portion 1311 and the inclined portion 1312, the faster the waste composite material in contact with the swirler 1310 falls to the lower part of the casing 1100, thereby increasing the mixing degree of the waste composite material. On the other hand, when the angle between the flat portion 1311 and the inclined portion 1312 decreases, the falling of the waste composite material is restricted, so the waste composite material is in contact with the swirler 1310 for a long time and receives a lot of heat. The angle between the flat portion 1311 and the inclined portion 1312 may be selected according to design specification.

The long sides of the flat portion 1311 and the inclined portion 1312 extend along the longitudinal direction of the casing 1100 and have the same lengths. On the other hand, the short sides of the flat portion 1311 and the inclined portion 1312 may have different lengths. As illustrated in FIG. 5, the length of the short side of the flat portion 1311 may be l₁, and the length of the short side of the inclined portion 1312 may be l₂. The length ratio of l₁ to l₂ may be 1:1 to 1:0.3, preferably 1:0.5. As l₁ increases, the waste composite material may be in contact with the larger area of the flat portion 1311 during the rotation of the casing 1100, and more heat may be transferred to the waste composite material. When the size of the waste composite material 2000 to be pyrolyzed is large or the amount of the waste composite material 2000 is large, l₁ may be increased so that a larger amount of the waste composite material 2000 may be in contact with a larger area of the flat portion 1311.

The length ratio of the flat portion 1311 to the inclined portion 1312 may be selected according to desired design specification. The material of the swirler 1310 may be metal with high thermal conductivity.

Meanwhile, as illustrated in FIG. 6, the inclination direction of the inclined portion 1312 may be directed in the rotational direction of the casing 1100. By having the inclination direction of the inclined portion 1312 directed in the rotational direction of the casing 1100, a fractionated waste composite material may be restricted from falling downward from the swirler 1310.

According to the present disclosure, the swirler 1310 has the inclined portion 1312, the waste composite material 2000 is prevented from being trapped or stuck in the swirler 1310 when the casing 1100 rotates. In addition, heat is better transferred to the waste composite material 2000 by the swirler 1310, but the waste composite material 2000 is better mixed with high-temperature air while the waste composite material 2000 falls from the swirler 1310 to the lower surface of the casing 1100. Accordingly, heat transfer efficiency to the waste composite material may be maximized.

The waste composite material is located at the lower part of the casing 1100, making it difficult to evenly transfer heat to the inside of the casing 1100. However, the movement module 1200 and the stirring module 1300 may efficiently transfer heat to the waste composite material while moving and mixing the waste composite material. At least one movement module 1200 and at least one stirring module 1300 may be arranged alternately. In the embodiment illustrated in FIG. 2, three movement modules 1200 and two stirring modules 1300 are arranged alternately, but the present disclosure is not limited thereto, and the movement modules 1200 and the stirring modules 1300, of various lengths and numbers, may be arranged alternately.

The residence time of the waste composite material may be controlled by adjusting the length of the long side of the stirring module 1300. The length of the stirring module 1300 is designed by considering residence time during the design of the reaction of the pyrolysis, and the residence time is determined by the total length and rotation speed of the casing 1100 and the length of the stirring module 1300. The material of each of the movement module 1200 and the stirring module 1300 may be metal with high thermal conductivity.

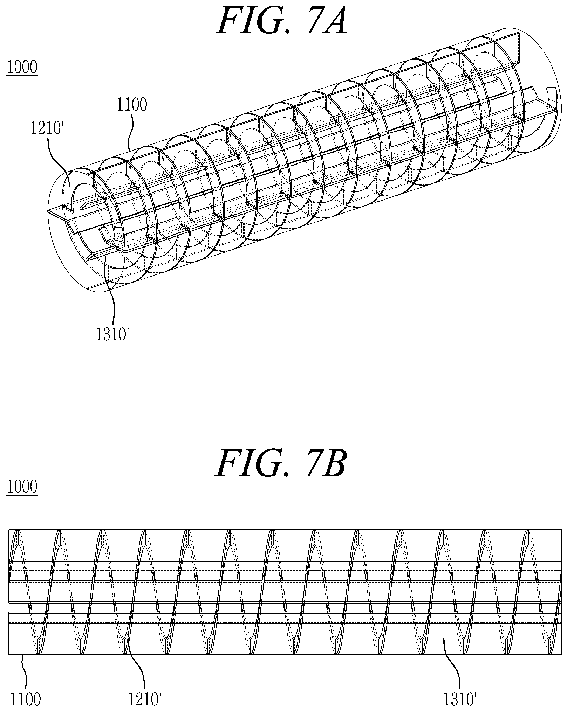

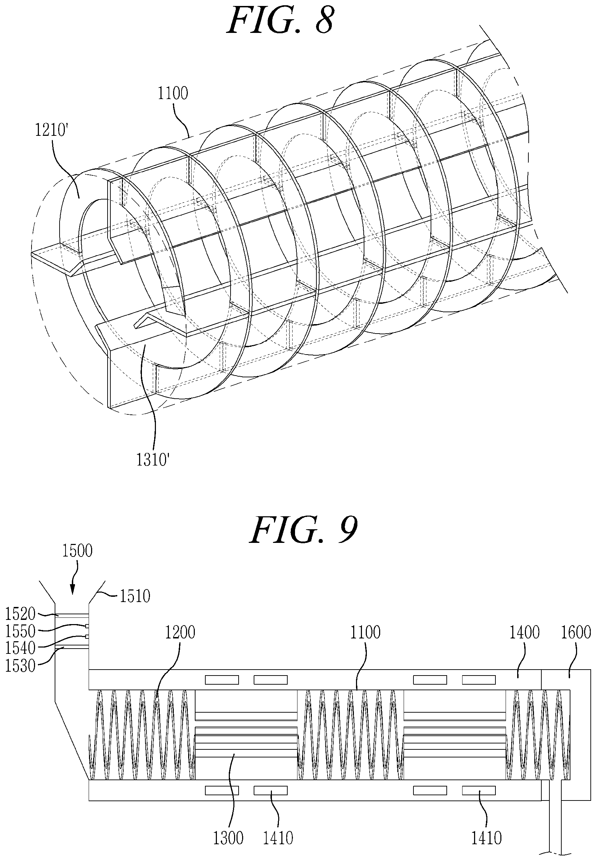

FIGS. 7A and 7B are views illustrating a pyrolysis reactor according to another embodiment of the present disclosure, and FIG. 8 is a view illustrating a movement module and a stirring module in the pyrolysis reactor according to the embodiment of the present disclosure.

In the another embodiment, the movement module 1200 and the stirring module 1300 may extend continuously along the longitudinal direction of the shaft and may be arranged by overlapping each other within the casing 1100.

The movement module 1200 moves the composite material within the casing 1100 when the casing 1100 rotates. As illustrated in FIGS. 7A and 7B, the movement module 1200 includes a spiral wing 1210'. The spiral wing 1210' is fixed to the inner wall of the casing 1100 and extends continuously along the longitudinal direction of the casing 1100.

The width of the spiral wing 1210 may be adjusted according to design specification. For example, the width of the spiral wing 1210' may be 10 to 15 cm. A distance between neighboring spirals of the spiral wing 1210' may be set to be different depending on target residence time. For example, the distance between the spirals of the spiral wing 1210' may be 0.1 to 0.3 m.

The residence speed of a waste composite material and the state of a reactant may be controlled by controlling the distance between the spirals of the spiral wing 1210' and the rotation speed of the casing 1100.

The material of the spiral wing 1210 may be metal with high thermal conductivity. The waste composite material may receive heat by being in contact with the spiral wing 1210'.

The stirring module 1300 mixes the waste composite material with hot air within the casing 1100. A swirler 1310 of the stirring module 1300 may effectively transfer heat to the waste composite material while mixing the waste composite material.

As illustrated in FIG. 8, the stirring module 1300 includes a plurality of swirlers 1310'. Each of the swirlers 1310' is in the form of a plate, and one side of the swirler 1310' is fixed on the inner wall of the casing 1100 and extends continuously in the longitudinal direction of the casing 1100. The plurality of swirlers 1310' may be arranged at equal angular intervals on the inner wall of the casing 1100. Two to four swirlers 1310' may be arranged along the inner circumferential surface of the casing 1100.

The swirler 1310 has the shape of a rectangular plate. The swirler 1310' has a long side extending in the longitudinal direction of the casing 1100 and a short side deployed in the radial direction of the casing. A first end of the swirler 1310' is fixed on the inner wall of the casing 1100, and a second end thereof is deployed toward the interior of the casing 1100.

The swirler 1310' may be bent at a predetermined angle on one side in the radial direction. As the second end of the swirler 1310' is bent, the swirler 1310' has the flat portion and the inclined portion. A first end of the flat portion is fixed on the inner wall of the casing 1100, and a second end thereof is directed in the radial direction of the casing 1100. The inclined portion has a first end connected to the flat portion and is inclined at a predetermined angle with respect to the flat portion. An angle θ between the flat portion and the inclined portion may be 90 to 170°, and preferably 90 to 120°.

During the rotation of the casing 1100, more heat is transferred to a waste composite material by the swirler 1310'. When the casing 1100 rotates, the movement of the waste composite material located at the lower part of the casing 1100 is restricted by the swirler 1310'. When the swirler 1310' is positioned above a predetermined height by the rotation of the casing 1100, the waste composite material fractionated by the swirler 1310' falls. In this case, the inclined portion of the swirler 1310' restricts the falling of the waste composite material that is in contact with the flat portion, thereby preventing the waste composite material from falling directly to the lower part of the casing 1100. The waste composite material may efficiently receive heat by being in contact with the swirler 1310' for a long time by the inclined portion.

In this case, the larger an angle between the flat portion and the inclined portion, the faster the waste composite material in contact with the swirler 1310' falls to the lower part of the casing 1100, thereby increasing the mixing degree of the waste composite material. On the other hand, when the angle between the flat portion and the inclined portion decreases, the falling of the waste composite material is restricted, so the waste composite material is in contact with the swirler 1310' for a long time and receives a lot of heat. The angle between the flat portion and the inclined portion may be selected according to design specification.

The long sides of the flat portion and the inclined portion extend along the longitudinal direction of the casing 1100 and have the same lengths. On the other hand, the short sides of the flat portion and the inclined portion may have different lengths. The length of the short side of the flat portion may be l₁, and the length of the short side of the inclined portion may be l₂. The length ratio of l₁ to l₂ may be 1:1 to 1:0.3, preferably 1:0.5. As l₁ increases, the waste composite material may be in contact with the larger area of the flat portion 1311 during the rotation of the casing 1100, and more heat may be transferred to the waste composite material. When the size of the waste composite material 2000 to be pyrolyzed is large or the amount of the waste composite material 2000 is large, l₁ may be increased so that a larger amount of the waste composite material 2000 may be in contact with a larger area of the flat portion.

The length ratio of the flat portion to the inclined portion may be selected according to desired design specification. The material of the swirler 1310' may be metal with high thermal conductivity.

Meanwhile, the inclination direction of the inclined portion may be directed in the rotational direction of the casing 1100. By having the inclination direction of the inclined portion directed in the rotational direction of the casing 1100, a fractionated waste composite material may be restricted from falling downward from the swirler 1310'.

According to the present disclosure, the swirler 1310' has the inclined portion, the waste composite material 2000 is prevented from being trapped or stuck in the swirler 1310' when the casing 1100 rotates. In addition, heat is better transferred to the waste composite material 2000 by the swirler 1310', but the waste composite material 2000 is better mixed with high-temperature air while the waste composite material 2000 falls from the swirler 1310' to the lower surface of the casing 1100. Accordingly, heat transfer efficiency to the waste composite material may be maximized.

The material of each of the movement module 1200 and the stirring module 1300 may be metal with high thermal conductivity.

FIG. 9 is a view illustrating a pyrolysis reactor according to an embodiment of the present disclosure.

As illustrated in FIG. 9, the pyrolysis reactor 1000 according to the present disclosure may further include a heating furnace 1400, a feeding part 1500, and a discharging part 1600.

The heating furnace 1400 supplies heat to a waste composite material. High-temperature gas may be introduced into the heating furnace 1400. The heating furnace 1400 indirectly heats the waste composite material by using high-temperature gas.

High-temperature gas may be generated by a burner (not shown) disposed outside the heating furnace 1400. The burner combusts pyrolysis gas and LNG to produce combustion gas. The generated high-temperature combustion gas may be supplied into the heating furnace 1400. The temperature of the combustion gas may be 400 to 500°C.

Meanwhile, a plurality of burners 1410 may be provided within the heating furnace 1400. Each of the burners 1410 is arranged outside the casing 1100, but may be arranged in an area in which the stirring module 1300 is arranged. The stirring module 1300 mixes the waste composite material and transfers heat to the waste composite material. By supplying additional heat from the outside of the casing 1100, more heat may be transferred to the waste composite material. The heat source of the burner 1410 may be pyrolysis gas and LNG.

The feeding part 1500 delivers the fragments of the waste composite material to the casing 1100. The feeding part 1500 is connected to a first end of the casing 1100.

The feeding part 1500 includes a hopper 1510, a first valve 1520, a second valve 1530, a gas inlet 1540, and a gas outlet 1550. The upper end of the hopper 1510 is open, and the waste composite material is supplied through the upper end of the hopper 1510. The hopper 1510 may have a truncated cone shape, which has a larger diameter at the upper end and a diameter decreasing downward therefrom, to facilitate receiving the waste composite material. A tubular passage extends below the hopper 1510.

For the pyrolysis of the waste composite material, air composition within the casing 1100 needs to be maintained constant. However, when the feeding part 1500 is opened to supply the waste composite material, outside air is also introduced, which changes gas composition within the casing 1100. To prevent this, the feeding part 1500 is provided with the first valve 1520 and the second valve 1530. The first valve 1520 is installed on the upstream side of the passage, and the second valve 1530 is installed on the downstream side of the passage.

The first valve 1520 and the second valve 1530 are not opened simultaneously, but are controlled to be opened sequentially. The first valve 1520 and the second valve 1530 may be opened in a sliding manner, and the degree of the opening may be adjusted depending on the amount of a waste composite material to be fed. In this embodiment, the feeding part 1500 has a double structure formed by the first and second valves 1520 and 1530, but is not limited thereto, and three or more valves may be provided on the feeding part. Each of the valves may move within a predetermined range. As each of the plurality of valves opens, the desired amount of the fragments of the waste composite material may be fed into the casing 1100. In addition, the waste composite material may be continuously fed into the casing 1100 by these dual valves, and the inflow of oxygen may be minimized during the feeding.

The first valve 1520 may be opened while the second valve 1530 is closed. When the first valve 1520 is closed and the feeding part 1500 is sealed after the first valve 1520 is opened and a predetermined amount of the shredded waste composite material is fed in, the second valve 1530 is opened. Simultaneously with the opening of the second valve 1530, flu gas may be injected through the gas inlet 1540. While the second valve 1530 is opened, the flue gas is supplied into the passage of the feeding part 1500, and when the second valve 1530 is closed again, the flue gas is discharged through the gas outlet 1550. By opening the second valve 1530, the waste composite material is fed into the casing 1100. To facilitate the feeding of the waste composite material into the casing 1100, the passage of the feeding part 1500 may have a surface inclined toward the casing 1100. The inflow of oxygen into the casing 1100 may be minimized by the dual valves and the supply of flue gas.

Carbon fiber, glass fiber, and char that have been pyrolyzed are discharged through the discharging part 1600. The discharging part 1600 is connected to an end part of a second side of the casing 1100. A discharge port is provided on one side of the discharging part 1600 to allow a pyrolysis reactant transmitted from the inside of the casing 1100 to be discharged. To discharge the pyrolysis reactant, an opening or cut surface may be formed on one end of the casing 1100.

The first end of the casing 1100 is rotatably connected to the feeding part 1500, and the second end of the casing 1100 is rotatably connected to the discharging part 1600. For the rotation of the casing 1100, a motor (not shown) may be disposed on the feeding part 1500 or the discharging part 1600, or on both the feeding part 1500 and the discharging part 1600.

A pyrolyzed reactant discharged from the discharging part 1600 may be moved to a reactant collection part (not shown). The reactant collection part accommodates the pyrolyzed reactant. The reactant collection part is connected to the discharging part 1600. The reactant collection part may have a slope formed on a side surface adjacent to the discharging part 1600 so that the pyrolysis product discharged from the discharging part 1600 does not abruptly collide with the bottom surface of the reactant collection part.

The reactant collection part may have a flue gas atmosphere of 100 °C or higher to prevent damage to a recycled fiber due to rapid temperature drop. The reactant collection part collects carbon fiber, glass fiber and char.

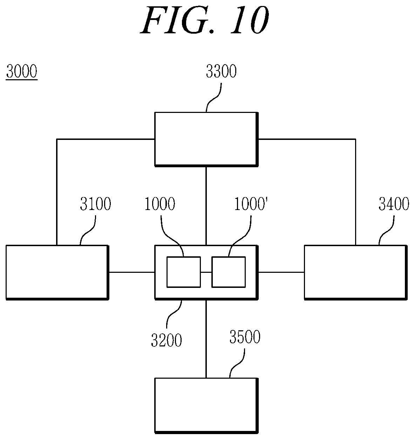

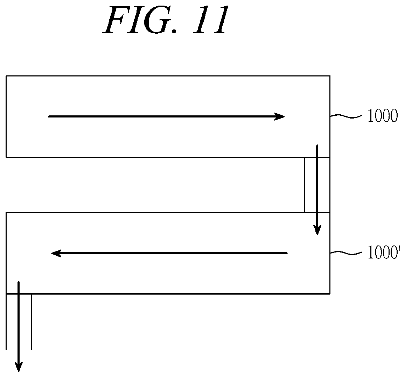

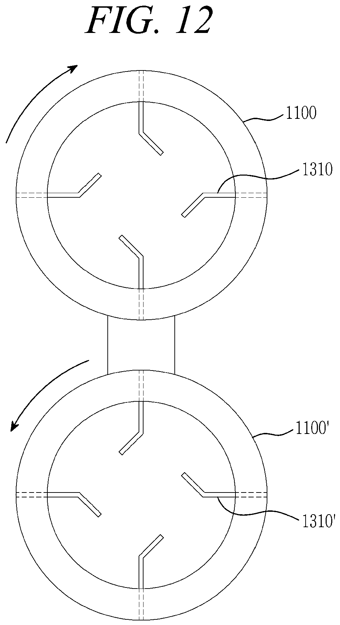

FIG. 10 is a diagram schematically illustrating an apparatus for recovering carbon fiber and glass fiber according to an embodiment of the present disclosure, FIG. 11 is a view illustrating two pyrolysis reactors installed in a stacked manner according to an embodiment of the present disclosure, and FIG. 12 is a view illustrating a transverse cross-section of the two pyrolysis reactors installed in a stacked manner according to the embodiment of the present disclosure.

As illustrated in FIG. 10, an apparatus 3000 for recovering carbon fiber and glass fiber includes a waste composite material supply unit 3100, a reaction unit 3200, a heat supply unit 3300, a reforming unit 3400, and a separation unit 3500.

The waste composite material supply unit 3100 supplies the waste composite material to the reaction unit 3200. The waste composite material supply unit 3100 may pretreat the waste composite material to a state suitable for pyrolysis and supply the pretreated waste composite material to the reaction unit 3200.

The waste composite material supply unit 3100 includes a shredding module, a transport module, a storage module, and a feeding module. The shredding module shreds a collected waste composite material to a predetermined size and transports the collected waste composite material to the storage module via the transport module. The shredding module may shred the waste composite material, which is cut to the predetermined length, to have thickness of 20 mm or less. Meanwhile, the shredding module may adjust the shredding size of the cut waste composite material. The shredding size of the waste composite material may be adjusted depending on the target condition and final product of the waste composite material. When recovery of long fibers is possible, the shredding sizes of waste blades may be increased.

In the recovery process, a conveyor may be used to transport the waste composite material to each unit and each module. A plurality of conveyors may be installed in succession or in parallel depending on the movement path of the waste composite material. The waste composite material may be screened during the transportation.

In order to reduce the generation of water vapor during the pyrolysis process of the waste composite material, hot air may be supplied to the storage module to dry a stored waste composite material.

The feeding module feeds the waste composite material into the pyrolysis reactor 1000 of the reaction unit 3200. A single-shaft screw feeder may be used to feed the shredded waste composite material. The feeding module may feed the waste composite material into the feeding part 1500 of the pyrolysis reactor 1000 either one-time or continuously.

Meanwhile, it is necessary to lower the temperature of the waste composite material placed in the feeding module 1140. A cooling jacket may be disposed on each of the lower surface and side surface of the feeding module 1140 to cool the waste composite material. The pyrolysis reactor, which is connected to the lower part of an inlet, is at a high temperature due to high-temperature gas flowing inside. By arranging the cooling jacket on each of the lower surface and side surface of the feeding module 1140, heat emitted from the pyrolysis reactor is transferred to the feeding module 1140, preventing a fire from occurring in a waste blade located within the feeding module 1140 before being fed into the pyrolysis reactor. The cooling jacket may lower the temperature of the fed waste composite material by receiving cold water from the cooling tower of the reforming unit.

The reaction unit 3200 receives the waste composite material from the waste composite material supply unit 3100 and pyrolyzes the waste composite material. The reaction unit 3200 includes at least one pyrolysis reactor 1000. The pyrolysis reactor 1000 may include the casing 1100, the movement module 1200, the stirring module 1300, the heating furnace 1400, the feeding part 1500, and the discharging part 1600.

Since the pyrolysis reactor 1000 has been described above, a description thereof is omitted.

The waste composite material fed into the pyrolysis reactor 1000 is pyrolyzed within the pyrolysis reactor 1000. The pyrolysis stage may go through a first pyrolysis stage and a second pyrolysis stage. Resin such as epoxy and wood contained in the waste composite material are gasified by the first pyrolysis. Resin and char remaining in the lump of the carbon fiber and the glass fiber are pyrolyzed by the second pyrolysis. The internal temperature of the pyrolysis reactor 1000 may be 400 to 600°C during the first pyrolysis and second pyrolysis.

The first pyrolysis and the second pyrolysis may be performed by the pyrolysis reactor 1000. Two or more pyrolysis reactors may be connected to each other and used by considering the residence time of the waste composite material in the reactor and the size of the waste composite material to be introduced, etc. For example, the reaction unit 3200 may include one first pyrolysis reactor 1000 and one second pyrolysis reactor 1000'. Alternatively, to secure residence time during the first pyrolysis, the reaction unit 3200 may include two first pyrolysis reactors 1000 and one second pyrolysis reactor 1000'.

The first pyrolysis reactor 1000 for the first pyrolysis and the second pyrolysis reactor 1000' for the second pyrolysis may be connected to each other horizontally or vertically. As illustrated in FIG. 11, when a plurality of pyrolysis reactors are connected vertically, the size of the entire plant may be reduced, and the degree of freedom in design may be increased.

When the two pyrolysis reactors 1000 and 1000' are arranged vertically, the rotation directions of the casing 1100 and a casing 1100' in the two pyrolysis reactors 1000 and 1000' may be opposite to each other. As illustrated in FIG. 12, the first pyrolysis reactor 1000 may rotate clockwise, and the second pyrolysis reactor 1000' may rotate counterclockwise. In this case, the deploying directions of the inclined portions of the swirlers 1310 and 1310' may be opposite to each other.

During the first pyrolysis, oxygen concentration within the first pyrolysis reactor 1000 is required to be maintained to be 10% or less. A sensor may be placed inside the first pyrolysis reactor 1000 to continuously measure the oxygen concentration. In another embodiment, a sensor may be placed in an exhaust line to measure oxygen concentration in exhausted gas.

The residence time of fragments of the waste composite material in the first pyrolysis reactor 1000 during the first pyrolysis may be 9 hours or less. When the residence time is more than 9 hours, reactants may be excessively carbonized. A temperature inside the first pyrolysis reactor 1000 may be 400 to 500°C.

As a result of the first pyrolysis, resin such as epoxy and wood contained in the waste composite material are gasified and the lump of carbon fiber and glass fiber remains as a product in the first pyrolysis reactor 1000. In this case, resin that is not gasified is carbonized (charred) and remains on the surfaces of the carbon fiber and glass fiber.

As the product of the process of the first pyrolysis, in addition to gas and char, oil vapor is generated. The oil vapor is cooled while the oil vapor passes through the reforming unit 3400, and some of the oil vapor may be extracted as gas and some thereof may be extracted as oil. The oil vapor may be cooled by water. The gas generated from the oil vapor may have a calorific value and flow into the gas tank of the heat supply unit 3300 to be used as an indirect heat source for the second pyrolysis.

The second pyrolysis may be performed in the second pyrolysis reactor 1000'. The second pyrolysis is a combustion reaction. The lump of the carbon fiber and the glass fiber from which some char has been removed is transferred to the second pyrolysis reactor 1000'. At this stage, the carbon fiber and glass fiber may have char stuck between the fibers. In the process of the second pyrolysis, combustion gas containing about 10% oxygen burns the remaining epoxy and char. The remaining epoxy and char are removed by the second pyrolysis process, i.e. the combustion process, and only the carbon fiber and the glass fiber remain.

A heat source for the second pyrolysis may be combustion gas. The temperature of the combustion gas injected into the second pyrolysis reactor 1000' may be 500 to 600°C, preferably 500°C. Oxygen concentration in the combustion gas may be approximately 10%. Resin and char remaining in the lump of the carbon fiber and the glass fiber are pyrolyzed by a combustion reaction within the second pyrolysis reactor 1000'.

The residence time of the lump of the carbon fiber and glass fiber in the second pyrolysis reactor 1000' may be 3 hours or less. In this case, when oxygen concentration inside the second pyrolysis reactor 1000' is high, oxidation of a heating target may occur, so the oxygen concentration is maintained at 10% or less.

As the result of the second pyrolysis, carbon fiber and glass fiber with high purity remain.

The heat supply unit 3300 may include a burner, a heat exchanger, an air blower, a scrubber, and a chimney. Heat energy required for pyrolysis reaction may be supplied by the burner. The burner may supply combustion gases to the casing in the form of indirect heating. The burner may use pyrolysis gas and LNG as fuel. The air blower injects outside air into the heat exchanger to exchange heat with the outside air. The outside air is heated by the heat exchanger and supplied to the storage module.

The scrubber processes waste gas. A dust collection device using NaOH aqueous solution may be used as the scrubber. In this embodiment, a washing dust collection device using NaOH aqueous solution is used, but the scrubber is not limited thereto, and a scrubber using a filtration method or an electrostatic method may also be used. The chimney finally discharges waste gas and by-products.

The reforming unit 3400 may be provided with a catalyst tower, a heat exchanger, a separation tank, a washing tank, a pressure control tank. The reforming unit 3400 converts pyrolysis gas into oil. About 30% of total pyrolysis gas may be converted into pyrolysis oil. This saves the amount of fuel required for pyrolysis.

The catalyst tower may use commercial catalysts of the zeolite series such as ZSM-5, but is not limited thereto. The pyrolysis gas flows into the lower part of the catalyst tower and is reformed as pyrolysis gas flows upward. The heat exchanger cools pyrolysis gas that has passed through the catalyst tower and converts the oil vapor into oil.

The separation tank separates condensed pyrolysis gas into gas and oil. The cooled pyrolysis gas moves to the separation tank. Gaseous pyrolysis gas is discharged from the upper part of the separation tank, and condensed oil is discharged from the lower part of the separation tank. The condensed oil may be stored in a pyrolysis oil storage tank.

Pyrolysis gas discharged from the upper part of the separation tank flows into the washing tank, and foreign substances are removed from the gaseous pyrolysis gas. The washing tank neutralizes the pyrolysis gas to reduce the amount of hydrogen chloride (HCl) in the pyrolysis gas, and the neutralized pyrolysis gas flows to the pressure control tank. The pressure control tank is placed to prevent backflow of the pyrolysis gas before the pyrolysis gas is supplied to the burner. The pyrolysis gas discharged from the pressure control tank may be supplied to the burner.

The reformed pyrolysis gas is used as fuel to heat the first and second pyrolysis reactors 1000 and 1000' again. By reusing the pyrolysis gas as fuel, overall fuel usage may be reduced and pollutant emissions may be reduced.

The separation unit 3500 may include a washing part, a separation part, a first chamber, a second chamber, carding modules, and pelletizing modules. The washing part receives the product of the second pyrolysis and washes the product so that lump of carbon fiber and glass fiber remains, and the separation part separates the product of the second pyrolysis into r-CF (recycled carbon fiber) and r-GF (recycled glass fiber). The r-CF and the r-GF may be separated from each other by using density difference therebetween. There are two methods of utilizing density differences: a dry method and a wet method. The dry method, which uses the flow of air, moves lightweight carbon fibers by causing the flow of air over the product of the second pyrolysis moving on a conveyor.

The wet method is a method of separating a carbon fiber and a glass fiber from each other by using liquid with an intermediate density between that of the carbon fiber and the glass fiber.

The carbon fiber and the glass fiber separated by the separation part may be moved to the first chamber and the second chamber, respectively. The separation of the carbon fiber and the glass fiber may be performed on a conveyor.

The carbon fiber and the glass fiber stored in the first chamber and the second chamber, respectively, may be post-processed for shipment.

The carding modules brush r-CF and r-GF having predetermined lengths. The lengths of the r-CF and the r-GF from which resin has been removed are 50 mm or less. The r-CF and the r-GF are brushed for post-processing since their fiber lengths are short. The brushed r-CF and r-GF are compressed and processed into non-woven fabrics. When the length of each of the r-CF and the r-GF is 5 mm or less, it is not easy to brush the r-CF and the r-GF, and thus the r-CF and the r-GF are not fed into the carding modules. Before the recovered r-CF and r-GF are fed into the carding modules, the r-CF and r-GF with lengths of 5 mm or less may be separated by using a mesh, etc.

The pelletizing modules melt and mix the recovered r-CF, r-GF, and resin to make pellets. The pelletizing modules cut the nonwoven fabrics produced in the carding modules to predetermined sizes and mix them with the melted resin. The r-CF and r-GF nonwoven fabrics having structures hardened by compression are shipped after being cured together with the resin.

The r-CF and the r-GF with lengths of 5 mm or less are fed directly into the pelletizing modules, respectively. The r-CF and the r-GF with lengths of 5 mm or less are directly mixed with resin and pelletized.

A controller may receive the size of the particle of the waste composite material fed into the pyrolysis reactor from the waste composite material supply unit 3100, and may determine whether carbon fibers and glass fibers stored in the first chamber and the second chamber, respectively, should be moved to the pelletizing modules via the carding modules, or directly to the pelletizing modules. The shredding size of the waste composite material may be adjusted during a shredding stage depending on the needs of a user.

In the present disclosure, the shredding and pyrolysis of the waste composite material, and the separation of a carbon fiber and a glass fiber may be performed in one process, and the waste composite material is moved to each unit by a conveyor. One or more conveyors may be linked together to control residence time in each unit.

While the embodiments of the present disclosure have been described, it will be apparent to those skilled in the art that various modifications and variations can be made in the present disclosure through addition, change, omission, or substitution of components without departing from the spirit of the disclosure as set forth in the appended claims, and such modifications and changes may also be included within the scope of the present disclosure.

## Claims

1. A pyrolysis reactor (1000) comprising:
a casing (1100) having a cylindrical shape;
at least one movement module (1200) including a spiral wing (1210) mounted on an inner wall of the casing (1100) and deployed in a longitudinal direction of the casing (1100); and
at least one stirring module (1300) including a plurality of plate-shaped swirlers (1310) mounted perpendicularly on the inner wall of the casing (1100) so that each of the swirlers (1310) extends in the longitudinal direction of the casing (1100), with the stirring module (1300) being arranged alternately with the movement module (1200).

2. The pyrolysis reactor (1000) of claim 1, wherein the swirler (1310) includes:
a flat portion (1311) having a short side in a radial direction of the casing (1100); and
an inclined portion (1312) inclined at a predetermined angle with respect to the flat portion (1311).

3. The pyrolysis reactor (1000) of claim 2, wherein an angle between the flat portion (1311) and the inclined portion (1312) is 90 to 170°.

4. The pyrolysis reactor (1000) of claim 2, wherein an end part of the inclined portion (1312) is directed in a rotational direction of the casing (1100).

5. The pyrolysis reactor (1000) of claim 2, wherein a length ratio of a cross-section of the flat portion (1311) to a cross-section of the inclined portion (1312) is 1:1 to 1: 0.3.

6. The pyrolysis reactor (1000) of any claim among claims 1 to 5, further comprising:
a heating furnace (1400) including a burner and accommodating the casing (1100) therein.

7. The pyrolysis reactor (1000) of claim 6, further comprising:
a feeding part (1500) arranged on one side of the heating furnace (1400) and connected to an end part of one side of the casing (1100),
wherein the feeding part (1500) includes:
a first valve (1520) located at an upstream side thereof;
a second valve (1530) located at a downstream side thereof; and
a gas inlet (1540) located between the first valve (1520) and the second valve (1530).

8. The pyrolysis reactor (1000) of any claim among claims 1 to 7, wherein a distance between neighboring spirals in the spiral wing (1210) is 0.1 to 0.3 m.

9. An apparatus (3000) for recovering carbon fiber and glass fiber, the apparatus (3000) comprising:
a waste composite material supply unit (3100);
a reaction unit (3200) configured to heat a waste composite material supplied from the waste composite material supply unit (3100);
a heat supply unit (3300) configured to supply heat to the reaction unit (3200);
a reforming unit (3400) configured to separate pyrolysis gas discharged from the reaction unit (3200) into gas and oil; and
a separation unit (3500) including a separation part configured to separate a product of the reaction unit (3200) into a first material and a second material, a first chamber configured to accommodate the first material, and a second chamber configured to accommodate the second material,
wherein the reaction unit (3200) includes at least one pyrolysis reactor (1000),
wherein the pyrolysis reactor (1000) includes:
a casing (1100) having a cylindrical shape;
at least one movement module (1200) including a spiral wing (1210) mounted on an inner wall of the casing (1100) and deployed in a longitudinal direction of the casing (1100);
at least one stirring module (1300) including a plurality of plate-shaped swirlers (1310) mounted perpendicularly on the inner wall of the casing (1100) so that each of the swirlers (1310) extends in the longitudinal direction of the casing (1100), with the stirring module (1300) being arranged alternately with the movement module (1200).

10. The apparatus (3000) of claim 9, wherein the swirler (1310) includes:
a flat portion (1311) having a short side in a radial direction of the casing (1100); and
an inclined portion (1312) inclined at a predetermined angle with respect to the flat portion (1311).

11. The apparatus (3000) of claim 10, wherein an angle between the flat portion (1311) and the inclined portion (1312) is 90 to 170°.

12. The apparatus (3000) of claim 10, wherein an end part of the inclined portion (1312) is directed in a rotational direction of the casing (1100).

13. The apparatus (3000) of claim 10, wherein a length ratio of a cross-section of the flat portion (1311) to a cross-section of the inclined portion (1312) is 1:1 to 1: 0.3.

14. The apparatus (3000) of any claim among claims 9 to 13, wherein the pyrolysis reactor (1000) further includes a heating furnace (1400) including a burner and accommodating the casing (1100) therein.

15. The apparatus (3000) of claim 14, wherein the pyrolysis reactor (1000) further includes a feeding part (1500) arranged on one side of the heating furnace (1400) and connected to an end part of one side of the casing (1100),
wherein the feeding part (1500) includes:
a first valve (1520) located at an upstream side thereof;
a second valve (1530) located at a downstream side thereof; and
a gas inlet (1540) located between the first valve (1520) and the second valve (1530).
